# EUROPEAN PATENT SPECIFICATION

(11) **EP 2 919 625 B1**
(45) Date of publication and mention of the grant of the patent: **29.04.2020**
(21) Application number: 13846231.2
(22) Date of filing: 17.07.2013
(51) Int. Cl.: A47G 21/18, B29L 23/00, B29C 65/10, B29C 65/00, B29C 53/08, B29C 53/84

(54) **DRINKING STRAW AND METHOD AND DEVICE FOR MANUFACTURING A DRINKING STRAW**
TRINKHALM SOWIE VERFAHREN UND VORRICHTUNG ZUR HERSTELLUNG EINES TRINKHALMS
PAILLE ET PROCÉDÉ ET DISPOSITIF DE FABRICATION D'UNE PAILLE

(30) Priority: 16.11.2012 HU P1200663
(43) Date of publication of application: 23.09.2015
(73) Proprietor: Silman Invest & Trade Ltd., Mahé (SC)
(72) Inventor: ECSERI, Ferenc, H-2700 Cegléd (HU); ECSERI, Mónika, H-1037 Budapest (HU)
(74) Representative: Kacsuk, Zsófia
(86) International application number: PCT/HU2013/000071
(87) International publication number: WO 2014/076514

(56) References cited:
- WO-A1-2008/055296
- WO-A1-2008/062241
- WO-A1-2010/050647
- WO-A1-2013/030607
- JP-A- S54 141 874
- KR-A- 20100 047 091
- RU-C2- 2 415 013
- US-A- 4 921 713
- US-A1- 2002 134 850
- US-A1- 2010 047 898

## Description

### FIELD OF THE INVENTION

The invention relates to a drinking straw for progressively adding active ingredients to liquid passing through the drinking straw.

The invention further relates to a method and a device for manufacturing such a drinking straw.

### BACKGROUND OF THE INVENTION

Various types of drinking straws are known for flavouring or changing the flavour of a liquid passing through the drinking straw. Such drinking straws can impart different flavours (e.g. cocoa, fruit, etc.) to a liquid for example milk.

There are solutions in which the flavouring agent is applied on a portion of the drinking straw and dissolves when this portion is immersed in the liquid. Patent application US 3,615,595 describes such flavouring drinking straw. In another embodiment according to US 3,615,595 the flavouring agent is applied on the inner wall of the drinking straw. A disadvantage of this solution is that dissolution of the flavouring agent thereby the flavouring effect is unsatisfactory.

Another common way of disposing the flavouring or other active agents within the drinking straw is by providing granules that contain the flavouring or other active agents that are progressively imparted to a liquid drawn through the drinking straw. A problem associated with this type of flavouring is that the granules have to be retained within the straw. Various devices have been suggested in the prior art for overcoming this problem.

Patent applications US 6,482,451 B1 and US 8,334,003 propose the use of filters the apertures of which are smaller than the cross-section of the granules whereby the liquid can be drawn through the apertures but the granules are retained. The proposed filters are in the form of end caps, whereby the manufacturing costs are increased: the filters need to be manufactured as separate elements and need to be affixed to the drinking straw in a separate manufacturing step. In practice the affixing is carried out by welding the wall of the straw and the inserted end cap from the outside whereby an external seam is formed on the outside of the wall of the straw. The sharp edges around the external seam have to be removed, which requires a further manufacturing step and may still leave unsmooth surface regions.

The problem of having to provide a separate filtering cap is partly overcome in the prior art. Patent application US 2008/0197141 A1 discloses a filled drinking straw both end parts of which are pressed together in a direction perpendicular to the longitudinal axis of the drinking straw thereby creating a narrow passage in order to prevent the undissolved flavouring granules from exiting the straw. By pressing the end parts the plastic body of the tube may also be pressed in a certain extent. To avoid this braces are placed in the tube near the pressed portion. However, if the tube is pressed transversally, large sized fillings can not be fixed in given portions of the tube since they may crack. Furthermore, flow of liquid is restricted because the cross-section is narrowed down to a single narrow passage, which is easily blocked by fillings. Another disadvantage is that sharp edges are formed on the outer surface of the pressed portion which might be inconvenient for the user and in particular for young children who will generally attempt to take more than the mouth piece into their mouth.

Patent application US 2008/0075809 proposes a drinking straw wherein the dissolvable granules are retained by crimping the straw body near the two ends which creates closures that slightly open when liquid is being drawn through the straw thereby allowing the liquid and the dissolved substances to pass through a narrow passage. This solution has for disadvantage that the opening of the crimps cannot be controlled whereby a smaller or larger passage might be created depending on the sucking force applied by the user. A further disadvantage associated with this type of retaining means is that the active ingredient concentration of the liquid drawn through the single narrow passage might vary substantially in time, since it is determined by the local concentration at the opening of the passage. Also such a single passage may be easily blocked by a filler such as a granule.

A further disadvantage of both of the above mentioned solutions is that the wall of the drinking straw is heated from the outside when deforming the straw. During this operation the straw can only be exposed to a heat that does not cause melting, since that would destroy the straw. Furthermore, the straw is generally made of a shape-memory plastic, generally polypropylene, therefore the crimped or otherwise deformed straw may reopen later on.

US 2012/0228400 A1 discloses integral filters formed from the sidewall of the drinking straw adjacent the ends thereof. According to a preferred embodiment the integral filter is formed by clamping and bonding the opposing sides of the tube ends such that an external seam is created, and by perforating the bonded side walls in order to allow liquid communication therethrough but retain the flavouring granules. The disadvantage of such an integral filter is that in spite of trimming any sharp corners along the seam uneven edges may remain that could be inconvenient for a user or even hurt or cut the mouth of the user, especially young children. The edges of the apertures may also be sharp or have inconvenient irregularities presenting the same disadvantage. According to other embodiments the integral filter is formed by cutting and folding or by deforming the tube end such as to cover most of the straw opening and by leaving only a narrow central aperture. The cut or deformed tube ends as well as the edges of the central aperture have the same disadvantage as explained before, furthermore, the deformed portions may reopen during use.

A further type of integral filter is disclosed in WO 2010/050647 A1, which discloses a drinking straw filled with flavouring granules which are closed off by parallel passages formed side by side in a row at both ends of the straw. This configuration has the disadvantage that the integral filter of WO 2010/050647 A1 is prone to breaking along a line between either two neighbouring passages.

It is an object of the present invention to overcome the problems associated with the prior art. In particular, it is an object of the invention to provide a drinking straw filled with fillers such as flavouring granules that does not contain filters or other inserts and wherein retention of the fillers is achieved by deforming a portion of the drinking straw. A further object is to provide a permanent and durable deformation of the straw in order to retain the fillers. It is a further object to create a user friendly deformed portion that cannot cut or otherwise hurt the mouth of the user. It is a further object not to hinder the liquid flow through the straw. A further object is to simplify manufacturing of the straw and to reduce the costs thereof by eliminating the need of filters, since such filters are manufactured as separate pieces that need to be fixed inside the straw in a separate manufacturing step.

The inventors have recognised that the above objects can be achieved if the straw is deformed spaced apart from its ends such that the inside of the straw is heated at given points (locations) for a short period in order to melt the inner surface of the wall and then the melted points are pressed together. In this case an internal seam is formed at the melted and pressed points. Complete closure of the cross-section of the straw is preferably ensured by applying spacers that create parallel passages between the pressed portions whereby the deformed portion of the straw is in the form of a branched portion. The plurality of passages ensure adequate liquid flow through the deformed branched portion and are less easily blocked than a single passage. This method also allows for fixing various filling elements along the straw, which can be fixed in the same manner. It should be appreciated that when fixing such a filling element the straw is pressed to such an extent only so as to securely hold the filling element at the desired location.

### SUMMARY OF THE INVENTION

In view of the above recognition the objects of the invention are achieved by a drinking straw according to claim 1

The invention further relates to a method and a device for manufacturing the drinking straw in accordance with claim 5 and claim 13 respectively.

Further advantageous embodiments of the invention are defined in the attached dependent claims.

Further details of the invention will be apparent from the accompanying figures and exemplary embodiments.

### BRIEF DESCRIPTION OF DRAWINGS

Fig. 1 is a schematic perspective view of a first embodiment of a drinking straw according to the invention.
Fig. 2 is a side view of a preferred embodiment of a nozzle according to the invention.
Fig. 3 is a front view of the nozzle according to Fig. 2.
Fig. 4 is a front view of a pressing tool according to the invention, which is illustrated in the open position surrounding the straw prior to deformation.
Fig. 5 is a front view of the pressing tool according to Fig. 4 illustrated in the closed position surrounding the straw and showing the cross section of a branched portion created by deformation of the straw.
Fig. 6 is a partial cutaway perspective view of a device comprising the nozzle according to Fig. 2 and the pressing tool according to Fig. 4, illustrating the deformation of a second portion of the straw once a first deformed portion has been created in accordance with Fig. 5 and the straw has been filled with a filler.
Fig. 7 is a front view of the device showing the nozzle inserted within the straw and the pressing tool arranged around the not yet filled straw.
Fig. 8 is a front view of the device showing the nozzle inserted within the straw and the pressing tool arranged around the not yet filled but already pressed straw.
Fig. 9 is a schematic perspective view of a second embodiment of a drinking straw according to the invention comprising an inner branched portion.
Fig. 10 is a schematic perspective view of a third embodiment of a drinking straw according to the invention comprising an angle-adjustable bellows segment.

### DETAILED DESCRIPTION OF PREFERRED EMBODIMENTS

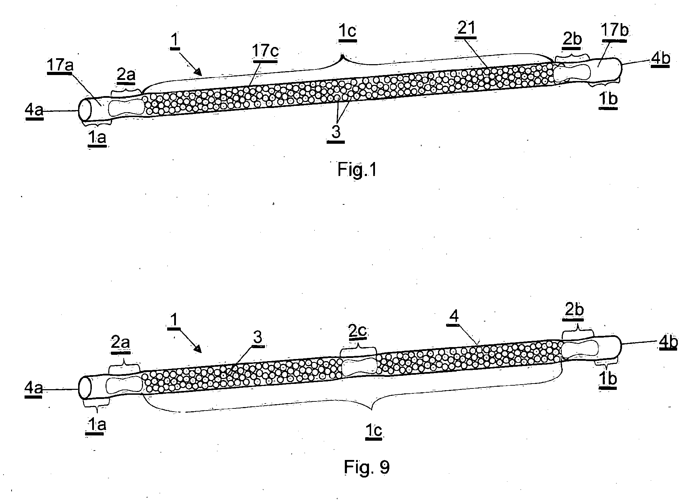

Fig. 1 schematically illustrates a first preferred embodiment of a drinking straw 1 in accordance with the present invention. According to the illustrated embodiment the straw 1 comprises a first tubular end portion 1a, a second tubular end portion 1b, a hollow elongate middle portion 1c, a first branched portion 2a connecting the first tubular end portion 1a with the middle portion 1c and a second branched portion 2b connecting the second tubular end portion 1b with the middle portion 1c. The straw 1 and its portions 1a, 1b, 1c, 2a, 2b are defined by a plastic wall 21 having a first end 4a and a second end 4b. The first tubular end portion 1a is adjacent the first end 4a of the straw 1 while the second tubular end portion 1b is adjacent the second end 4b of the straw 1.

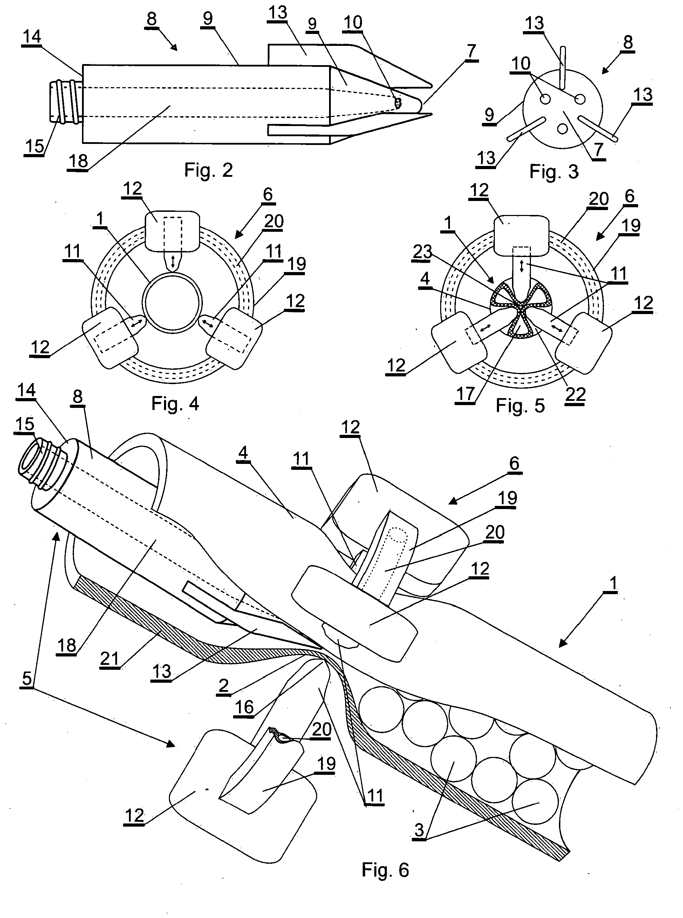

The first and second branched portions 2a, 2b each define at least two but preferably three to five parallel passages 17 (see Fig. 5) that are in fluid communication with a single passage 17a, 17b of the first and second tubular end portion 1a, 1b respectively. The parallel passages 17 of the first and second branched portions 2a, 2b are defined by neighbouring recesses 22 formed in the wall 21 of the straw 1 and an inner seam 23 connecting inner points of the neighbouring recesses 22.

In the present embodiment the elongate middle portion 1c also comprises a single passage 17c providing fluid communication between the parallel passages 17 of the first and second branched portions 2a, 2b. The passage 17c of the middle portion 1c is partly or fully filled with a filler 3 preferably in the form of granules and containing solvable active ingredients that progressively dissolve into a liquid drawn through the straw 1. Such active ingredients may be flavouring substances, edible colorants, vitamins, minerals, food additives and the like.

The term "granule" is understood to include all kinds of small grains, particles, granulate materials, pellets, nonpareils, dragees etc. used in the food industry. The granules may have a homogeneous structure wherein the one or more active ingredients are homogeneously distributed in a carrying material.

According to another embodiment the granules may comprise a core and one or more coatings provided thereon. For example the core may be a sugar seed and a coating comprising one or more active ingredients may be formed thereon by various technologies. Some of the granules may contain an outer coating that serves as a time delay surface coating, whereby release of the active ingredient contained in an inner coating or in the core is delayed as long as the delayed release surface coating is not dissolved. The granules may contain such delayed release surface coatings in different thickness, whereby the granules start to release the active ingredients after different time spent in the liquid (beverage) that is drawn through the straw 1. This may serve to obtain a sustained release effect or to release different active ingredients sequentially. For example granules containing different flavourings may be provided with delayed release surface coatings of different thickness, whereby the released flavouring varies in time during the consumption of the beverage.

The granules may also have a layered structure formed e.g. by hard panning technology, wherein a plurality of coating solution layers are applied on an edible core (such as sugar seed) in a rotating pan and each layer is dried in order to harden before the application of the subsequent layer. The one or more active ingredients can be added to the coating solution. This technology has significance if concentric layers are to be formed with different active ingredients in which case the composition of the coating solution is changed between the coating steps.

The dimensions (in particular cross section) of the filler 3 and the cross section of the parallel passages 17 are chosen such as to prevent the filler 3 from passing through the parallel passages 17 of the first and second branched portions 2a, 2b whereby the liquid can be drawn through the straw 1 while the filler 3 is retained in the middle portion 1c. According to a preferred embodiment the filler 3 comprises spherical or near spherical granules in which case the skilled person will easily determine the minimal diameter of the granules that can be retained by the parallel passages 17 having a given size and shape. Otherwise the average cross section of the filler 3 can be taken into account. It is also possible to dimension the parallel passages 17 so as to retain a filler 3 of a given size and shape. Increasing the number of the recesses 22 and thereby the number of the passages 17 formed there between results in more narrow cross section of the passages 17. Furthermore, using thicker spacers 13 increases the cross section of the passages 17 as will be explained later on.

The drinking straw 1 according to the invention can be formed by a device 5 (best shown in Fig. 6) comprising a nozzle 8 (Figs. 2 and 3) and a pressing tool 6 (Figs. 4 and 5). The nozzle 8 comprises a head 9 that is provided with openings 10 near the nozzle end 7 preferably along a circular perimeter and evenly spaced apart from each other. The openings may have a diameter of about 0.3 to 1 mm. Spacers 13 are also provided on the nozzle head 9 which serve to ensure the formation of passages 17 in order to allow liquid communication through the branched portions 2a, 2b. The shape and thickness of the spacers 13 determine the cross section of the passages 17 as will be apparent to the skilled person. Accordingly, at least two but preferably three to five spacers 13 are provided to form a corresponding number of parallel passages 17. Furthermore, preferably the number of the openings 10 also corresponds to the number of the parallel passages 17 to be formed, and the spacers 13 are preferably evenly spaced between the openings 10 as illustrated in Figs. 2 and 3. According to the present embodiment the nozzle 8 comprises a nozzle inlet 14 which is provided with a connector portion 15 that is connected with the openings 10 via an internal channel 18. The connector portion 15 allows for connecting the nozzle 8 to a hot air supply providing preferably hot air of about 150 to 250°C and of about 300 to 700 kPa (3 to 7 bar) pressure, which is conducted to the openings 10 through the channel 18. Other hot fluids than air may be used as well to form the branched portion 2 as will be apparent to the skilled person.

According to the present embodiment the pressing tool 6 comprises chucks 12 and pressing rods 11 inserted therein (see Figs. 4 and 5). The number of the chucks 12 and pressing rods 11 correspond to the number of the parallel passages 17 to be formed. The pressing rods 11 are displaceable in the direction of the arrows indicated in Figs. 4 and 5. Displacement of the pressing rods 11 might be achieved by means of hydraulic or pneumatic action or by any other known means. For example the chucks 12 might be supported by a connector 19 having an inner duct 20 for conducting the actuating medium of the pressing rods 11 to the chucks 12. For example the pressing rods 11 may be held in an initial position by means of springs (not shown).

The method of producing the drinking straw 1 according to the invention and in particular of forming the branched portions 2a, 2b of the drinking straw 1 will be explained with reference to the device 5.

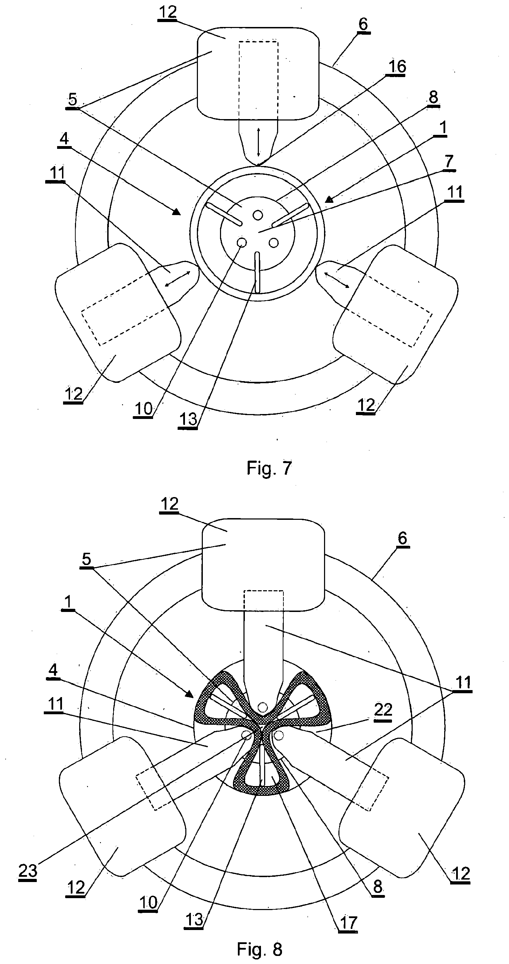

When using the device 5 the nozzle 8 is inserted into the drinking straw 1 such that the spacers 13 reach at least partly into the portion of the drinking straw 1 where the branched portion 2a, 2b is to be formed. The wall 21 of the drinking straw 1, where the branched portion 2a, 2b is to be formed, is fitted between the pressing rods 11 of the pressing tool 6 such that the pressing ends 16 of the pressing rods 11 are each facing a longitudinal axis defined by one opening 10 of the nozzle 8 between two neighbouring spacers 13 as illustrated in Fig. 7. The pressing ends 16 of the pressing rods 11 are somewhat shifted with respect to the openings 10 and the nozzle end 7 in order to allow the pressed regions of the wall 21 of the straw 1 to contact each other or a filling element 3a placed within the straw 1 when the pressing rods 11 are pushed inside.

Formation of the branched portions 2a, 2b is illustrated in Figs. 6 to 8.

Firstly, prior to filling the straw 1 with the filler 3, the first branched portion 2a is formed spaced apart from the first end 4a of the straw 1 via the device 5. The straw 1 is inserted into the pressing tool 6 such that the middle part of the branched portion 2a, 2b to be formed lies between the pressing rods 11 of the pressing tool 6. Following this, the nozzle 8 (Fig. 2) is inserted into the straw 4 such that the nozzle end 7 does not reach the working section of the pressing rods 11 in order to allow the pressing rods 11 to push the wall 21 of the straw inside. The wall 21 of the straw 1 is preferably made from a thermoplastic material, preferably from polypropylene that can be easily deformed when applying heat thereto. The first branched portion 2a is formed by applying heat to the inside of the wall 21 by directing high pressure hot air of about 150 - 250°C, preferably of about 250°C and of about 500 kPa pressure at the wall 21 through the openings 10 of the nozzle 8 for a very short period of time preferably about 0.2 to 0.6 sec, most preferably about 0.5 sec. The temperature and pressure of the hot air is chosen with regard to the thickness and material properties of the wall 21. If the wall 21 is thick then higher temperatures and greater pressure may be used. Generally the hot air is applied for no longer than 1 sec and the pressure is not increased over 700 kPa.

By supplying hot air to the channel 18 of the nozzle 8 at high pressure and directing the hot air at the inner side of the wall 21 of the straw 1 through the openings 10, the regions of the wall 21 facing the pressing rods 11 is heated and plasticized (or melted) for about 0.2 to 0.6 sec, most preferably about 0.5 sec. After this, the heated regions of the wall 21 are pressed against each other via the pressing rods 11 for a time period of about 0.5 to 1.5 sec, preferably for about 1 sec. For example, the pressing rods 11 may be actuated by means of hydraulic or pneumatic force and may be kept in the initial position by spring force. Heating the inner side of the wall 21 of the straw 1 ensures that the wall 21 can be deformed without causing cracks or other damages. By pressing the pressing rods 11 inside recesses 22 are formed in the wall 21 and where the inner points of the recesses 22 meet the plasticized (melted) material bonds thereby creating an inner seam 23. In practice the method can be regarded as spot welding.

The spacers 13 have for function to support the wall 21 of the straw 1 between the pressed locations whereby parallel passages 17 are created between the recesses 22. The shape and size of the parallel passages 17 can be influenced by the shape and dimension of the spacers 13. The spacers 13 preferably reach beyond the nozzle end 7. In order not to require an excessive thinning of the wall 21 at the branched portions 2a, 2b, the spacers 13 are preferably tapered whereby the regions between the pressed locations are also drawn inside and the cross sectional diameter of the branched portions 2a, 2b becomes smaller than the diameter of the tubular end portions 1a, 1b and the middle portion 1c.

Once the first branched portion 2a has been created the middle portion 1c of the straw 1 is filled with the filler 3 through the second open end 4b of the straw 1. The branched portion 2a stops the filler 3, which is preferably in the form of granules, from falling out through the first open end 4a. After having filled the middle portion 1c the second branched portion 2b is created in a similar way (see Fig. 6).

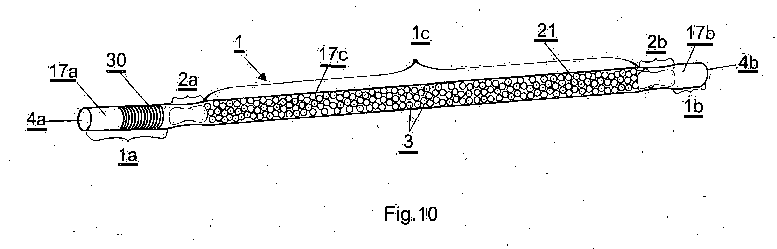

The branched portions 2a, 2b are preferably spaced apart from the first and second ends 4a, 4b of the straw 1 respectively and their locations are chosen so as to leave sufficiently long tubular end portions 1a, 1b that can serve as a mouthpiece when the user uses the drinking straw 1. The first and second tubular end portions 1a, 1b may be symmetric and the user may use either one as the mouthpiece. According to another preferred embodiment depicted in Fig. 10 one of the tubular end portions 1a comprises an angle-adjustable bellows segment 30 which is well known in the art and is conventionally used in so-called bendable straws. In the latter case this tubular end portion 1a serves as the mouthpiece.

When using the drinking straw 1 the user inserts one end 4b into a preferably neutral beverage such as milk, takes the opposite end portion 1a (or a portion thereof) into his or her mouth, and applies sucking force so as to draw the liquid (beverage) through the straw 1. The liquid enters the middle portion 1c through the parallel passages 17 of the lower (second) branched portion 2b, which retain the filler 3. The liquid then passes through the elongate middle portion 1c containing the filler 3, where depending on the amount of time spent there, a certain amount of active ingredients such as flavouring agents, colorants, food additives, vitamins, etc. are dissolved into the liquid as well as the solid material of the filler 3, which is preferably sugar. The liquid carrying the dissolved active agents and solid material passes through the parallel passages 17 of the upper (first) branched portion 2a while the filler 3 is prevented from entering the upper (first) tubular end portion 1a. The user thus draws flavoured or otherwise modified beverage from the upper end 4a of the drinking straw 1.

According to another preferred embodiment illustrated in Fig. 9 the elongate middle portion 1c of the straw 1 is provided with an inner branched portion 2c. The inner branched portion 2c is depicted as being at the middle of the middle portion 1c, however, one or more similar inner branched portions 2c may be formed at any location within the middle portion 1c. The inner branched portion 2c is formed in a similar manner as explained in connection with the first and second branched portions 2a, 2b. As regards the whole manufacturing process, the inner branched portion is formed after the first branched portion 2a has been created and the portion of the middle portion 1c between the first branched portion 2a and the inner branched portion 2c has been filled with the filler 3 (preferably granules). If a plurality of inner branched portions 2c is to be provided along the middle portion 1c, these are formed one after the other and the corresponding portion of the middle portion 1c is filled with the filler 3 prior to the formation of the subsequent inner branched portion 2c.

In order to render the drinking straw 1 more appealing the filler 3 arranged between a given pair of branched portions 2a, 2b, 2c (i.e. either an end branched portion 2a, 2b and an inner branched portion 2c, or between two branched portions 2c) may differ in colour, shape, size or active ingredient content from the filler 3 arranged between another pair of branched portions 2a, 2b, 2c.

The invention has been described by way of embodiments comprising three parallel passages 17 at each branched portion 2a, 2b, 2c, and accordingly the device 5 has been shown as comprising a nozzle 8 having three nozzle openings 10 and a pressing tool 6 having three chucks 12 and three pressing rods 11 arranged at 120° with respect to each other. However, the branched portions 2a, 2b, 2c may be formed by more or less recesses 22 defining more or less parallel passages 17 in which case a device 5 comprising a corresponding number of nozzle openings 10 and pressing rods 11 can be used for manufacturing purposes.

The drinking straw 1 according to the invention has for advantage that it can be manufactured simply and cost efficiently as it does not require the manufacture and fixing of separate filters. The branched portions 2a, 2b, 2c comprise inner seams 23, which is more user friendly and does not require an additional step of smoothening the outer surface of the wall 21. Furthermore, when creating the inner seams 23 less heat needs to be applied (since only the inner surface of the wall 21 has to be melted and the heat is applied directly to this side of the wall 21) whereby the danger of burning holes in the wall 21 of the straw 1 is eliminated. This results in substantially less waste products (i.e. drinking straws 1 with damaged walls 21 that are unsuitable for use). The seam 23 prevents the wall 21 from reopening.

The process of applying heat from the inside of the straw 1 is further advantageous because this way the thickness of the wall 21 is irrelevant since it is plasticized from the inside whereby deformation is facilitated in that directions (i.e. it is more easy to form the recesses 22 since the inner side of the wall 21 needs to stretch more than the external side) and the deformation can be carried out without occasioning cracks or other damages in the wall 21.

Various modifications to the above disclosed embodiments will be apparent to a person skilled in the art without departing from the scope of protection determined by the attached claims.

## Claims

1. Drinking straw including a plastic wall (21) having a first end (4a) and a second end (4b), the plastic wall comprising:
- a first tubular end portion (1a) adjacent the first end (4a) and defining a single passage (17a);
- a first branched portion (2a) spaced apart from the first end (4a) and defining at least three parallel passages (17) formed around a longitudinal axis of the drinking straw (1) and being in fluid communication with the single passage (17a) of the first tubular end portion (1a);
- a second tubular end portion (1b) adjacent the second end (4b) and defining a single passage (17b);
- a second branched portion (2b) spaced apart from the second end (4b) and defining at least three parallel passages (17) formed around a longitudinal axis of the drinking straw (1) and being in fluid communication with the single passage (17b) of the second tubular end portion (1b); and
- a hollow elongate middle portion (1c) providing fluid communication between the parallel passages (17) of the first branched portion (2a) and the parallel passages (17) of the second branched portion (2b);
the parallel passages (17) of the first and second branched portions (2a, 2b) are defined by neighbouring recesses (22) formed in the wall (21) and a common inner seam (23) connecting the neighbouring recesses (21) along the longitudinal axis of the drinking straw (1); fillers (3) containing active ingredients are arranged within the middle portion (1c) for progressively adding the active ingredients to a liquid drawn through the straw (1) and the dimensions of the fillers (3) and the cross section of the parallel passages (17) are chosen such as to prevent the fillers (3) from passing through the parallel passages (17) of the first and second branched portion (2a, 2b).

2. The drinking straw according to claim 1, wherein the middle portion (1c) is an elongate tubular portion defining a single passage (17c) or the middle portion (1c) comprises at least one inner branched portion (2c) comprising parallel passages (17) that are defined by neighbouring recesses (22) formed in the wall (21) of the straw (1) and an inner seam (23) connecting the neighbouring recesses (22), and the fillers (3) are arranged between the first, second and inner branched portions (2a, 2b, 2c).

3. The drinking straw according to claim 2, wherein the fillers (3) arranged between a given pair of branched portions (2a, 2c) differ in colour, shape or active ingredient content from the fillers (3) arranged between another pair of branched portions (2b, 2c).

4. The drinking straw according to any of claims 1 to 3, wherein one of the tubular end portions (1a, 1b) comprises an angle-adjustable bellows segment (30).

5. Method for manufacturing a drinking straw (1) according to any of claims 1-4, which is filled with fillers (3) containing active ingredients for progressively adding the active ingredients to liquid passing through the drinking straw (1), the method comprising the steps of:
- providing a plastic straw (1) having an elongate tubular wall (21) with a first end (4a) and a second end (4b);
- forming the wall (21) of the straw (1) into a first branched portion (2a) spaced apart from the first end (4a) of the straw by heating at least three given regions of an inner side of the wall (21), pressing the heated wall regions against each other such as to form recesses (22) therein and such as to create a common inner seam (23) between the inner points of the recesses (22) contacting each other thereby defining at least three parallel passages (17) within the first branched portion (2a);
- providing fillers (3) containing solvable active ingredients and having dimensions that prevent the fillers (3) from passing through the parallel passages (17);
- filling the fillers into the straw (3) from the second end (4b);
- forming the wall (21) of the straw (1) into a second branched portion (2b) spaced apart from the second end (4b) of the straw (1) by heating at least three given regions of the inner side of the wall (21), pressing the heated wall regions against each other such as to form recesses (22) therein and such as to create a common inner seam (23) between the inner points of the recesses (22) contacting each other thereby defining at least three parallel passages (17) within the second branched portion (2b).

6. The method according to claim 5, wherein heating the inner side of the wall (21) includes blowing hot air of 150 to 250°C at regions evenly spaced apart from each other at the circumference of the wall (21) and preferably the hot air is applied for not more than 1 sec, preferably for 0.2 to 0.6 sec.

7. The method according to any of claims 5 or 6, wherein the step of forming the wall (21) of the straw (1) into a branched portion (2a, 2b) includes supporting the inner side of the wall (21) between the pressed regions, preferably by providing spacers (13) within the straw (1) at locations between the heated and pressed regions in order to support the wall (21) when the heated regions are being pressed.

8. The method according to claim 5, wherein heating the inner side of the wall (21) includes inserting a nozzle (8) into the straw (1), which nozzle (8) comprises nozzle openings (10) directed at the inner side of the wall (21) and blowing hot air of preferably 150 to 250°C through the nozzle openings (10).

9. The method according to claim 8, wherein the nozzle (8) is provided with spacers (13) between the nozzle openings (10) and the step of pressing the heated regions includes supporting the inner side of the wall (21) between the pressed regions via the spacers (13).

10. The method according to any of claims 5 to 9, wherein the step of filling fillers (3) into the straw (1) includes:
- partially filling the straw (1);
- forming the wall (21) of the straw (1) into a first branched portion (2a) adjacent the filled portion of the straw (1) by heating at least three given regions of the inner side of the wall (21), pressing the heated wall regions against each other such as to form recesses (22) therein and such as to create an inner seam (23) between the inner points of the recesses (22) contacting each other thereby defining at least three parallel passages (17) within the inner branched portion (2a);
- filling further fillers into the straw (1).

11. The method according to any of claims 5 to 10, wherein the step of forming the branched portion (2a, 2b) includes heating and pressing three regions that are evenly spaced apart from each other along the circumference of the wall (1).

12. The method according to any of claims 5 to 11, wherein the step of pressing the heated wall regions against each other includes arranging a pressing tool (6) having pressing rods (11) around an external side of the wall (21) such that the pressing rods (11) face the heated regions of the wall (21) and pushing the pressing rods (11) inside such as to form recesses (22) in the wall (21) and to press the inner points of the recesses (22) together in order to create the inner seam (23).

13. Device for forming a plastic wall (21) of a straw (1) according to any of claims 1-4 into a branched portion (2a, 2b) defining at least three parallel passages (17) therein, **characterised by** comprising
- a nozzle (8) dimensioned for insertion into the straw (1) and having at least two openings (10) for blowing hot air at an inner side of the wall (21) of the straw (1) and thereby heating and plasticizing regions thereof;
- a pressing tool (6) having pressing rods (11) that can be arranged around the external side of the wall (21) for pressing the heated regions of the wall (21) such as to form recesses (22) in the wall (21) and such as to press the inner points of the recesses (22) together in order to create a common inner seam (23) connecting the recesses (22).

14. The device according to claim 13, wherein the nozzle (8) is provided with spacers (13) between the nozzle openings (10) and the spacers (13) being dimensioned so as to support the inner side of the wall (21) between the pressed regions and ensure the formation of the parallel passages (17).

15. The device according to claims 13 or 14, wherein the nozzle openings (10) are provided on a nozzle end (7) evenly spaced apart from each other along a circular perimeter, and the pressing rods (11) are held in chucks (12) evenly spaced from each other and attached to a connector (19) having an inner duct (20) for supplying a hydraulic or pneumatic medium to the chucks (12) for actuating the pressing rods (11).

## Patentansprüche

1. Trinkhalm einschließlich einer Kunststoffwand (21) mit einem ersten Ende (4a) und einem zweiten Ende (4b), die Kunststoffwand umfassend:
- einen ersten rohrförmigen Endteil (1a), der an das erste Ende (4a) angrenzt und einen einzigen Durchgang (17a) definiert;
- einen ersten verzweigten Teil (2a), der von dem ersten Ende (4a) beabstandet ist und mindestens drei parallele Durchgänge (17) definiert, die um eine Längsachse des Trinkhalms (1) herum ausgebildet sind und in Fluidverbindung mit dem einzigen Durchgang (17a) des ersten rohrförmigen Endteils (1a) stehen;
- einen zweiten rohrförmigen Endteil (1b), der an das zweite Ende (4b) angrenzt und einen einzigen Durchgang (17b) definiert;
- einen zweiten verzweigten Teil (2b), der von dem zweiten Ende (4b) beabstandet ist und mindestens drei parallele Durchgänge (17) definiert, die um eine Längsachse des Trinkhalms (1) herum ausgebildet sind und in Fluidverbindung mit dem einzigen Durchgang (17b) des zweiten rohrförmigen Endteils (1b) stehen;
- einen hohlen, länglichen mittleren Teil (1c), der eine Fluidverbindung zwischen den parallelen Durchgängen (17) des ersten verzweigten Teils (2a) und den parallelen Durchgängen (17) des zweiten verzweigten Teils (2b) bereitstellt;
die parallelen Durchgänge (17) des ersten und zweiten verzweigten Teils (2a, 2b) sind durch benachbarte Aussparungen (22), die in der Wand (21) ausgebildet sind, und eine gemeinsame Innennaht (23) definiert, die die benachbarten Aussparungen (21) entlang der Längsachse des Trinkhalms (1) verbindet; Füllstoffe (3), die Wirkstoffe enthalten, sind innerhalb des mittleren Teils (1c) angeordnet, um die Wirkstoffe nach und nach einer durch den Halm (1) gesaugten Flüssigkeit hinzuzufügen, und die Abmessungen der Füllstoffe (3) und der Querschnitt der parallelen Durchgänge (17) sind so gewählt, dass die Füllstoffe (3) daran gehindert werden, durch die parallelen Durchgänge (17) des ersten und des zweiten verzweigten Teils (2a, 2b) zu gelangen.

2. Trinkhalm nach Anspruch 1, wobei der mittlere Teil (1c) ein länglicher röhrenförmiger Teil ist, der einen einzigen Durchgang (17c) definiert, oder der mittlere Teil (1c) mindestens einen inneren verzweigten Teil (2c) umfasst, der parallele Durchgänge (17) umfasst, die durch benachbarte Aussparungen (22), die in der Wand (21) des Halms (1) ausgebildet sind, und eine Innennaht (23), die die benachbarten Aussparungen (22) verbindet, definiert sind, und die Füllstoffe (3) zwischen dem ersten, zweiten und inneren verzweigten Teil (2a, 2b, 2c) angeordnet sind.

3. Trinkhalm nach Anspruch 2, wobei sich die zwischen einem gegebenen Paar von verzweigten Teilen (2a, 2c) angeordneten Füllstoffe (3) in Farbe, Form oder Wirkstoffgehalt von den zwischen einem anderen Paar von verzweigten Teilen (2b, 2c) angeordneten Füllstoffen (3) unterscheiden.

4. Trinkhalm nach einem der Ansprüche 1 bis 3, wobei einer der rohrförmigen Endteile (1a, 1b) ein winkelverstellbares Balgsegment (30) umfasst.

5. Methode zur Herstellung eines Trinkhalms (1) nach einem der Ansprüche 1-4, der mit Füllstoffen (3) gefüllt ist, die Wirkstoffe enthalten, um die Wirkstoffe nach und nach der durch den Trinkhalm (1) hindurchgehenden Flüssigkeit hinzuzufügen, wobei die Methode die folgenden Schritte umfasst:
- Bereitstellen eines Kunststoffhalms (1) mit einer länglichen rohrförmigen Wand (21) mit einem ersten Ende (4a) und einem zweiten Ende (4b);
- Formen der Wand (21) des Halms (1) zu einem ersten verzweigten Teil (2a), der von dem ersten Ende (4a) des Halms beabstandet ist, indem mindestens drei vorgegebene Bereiche einer Innenseite der Wand (21) erwärmt werden, wobei die erwärmten Wandbereiche so gegeneinander gepresst werden, dass Aussparungen (22) darin gebildet werden und eine gemeinsame Innennaht (23) zwischen den Innenpunkten der Aussparungen (22), die einander berühren, erzeugt wird, wodurch mindestens drei parallele Durchgänge (17) innerhalb des ersten verzweigten Teils (2a) definiert werden;
- Bereitstellen von Füllstoffen (3), die lösliche Wirkstoffe enthalten und deren Abmessungen den Durchtritt der Füllstoffe (3) durch die parallelen Durchgänge (17) verhindern;
- Einfüllen der Füllstoffe in den Halm (3) vom zweiten Ende (4b) aus;
- Formen der Wand (21) des Halms (1) zu einem zweiten verzweigten Teil (2b), der von dem zweiten Ende (4b) des Halms (1) beabstandet ist, indem mindestens drei vorgegebene Bereiche der Innenseite der Wand (21) erwärmt werden, wobei die erwärmten Wandbereiche so gegeneinander gepresst werden, dass Aussparungen (22) darin gebildet werden und eine gemeinsame Innennaht (23) zwischen den Innenpunkten der Aussparungen (22), die einander berühren, erzeugt wird, wodurch mindestens drei parallele Durchgänge (17) innerhalb des zweiten verzweigten Teils (2b) definiert werden;

6. Methode nach Anspruch 5, wobei die Erwärmung der Innenseite der Wand (21) das Blasen von Heißluft von 150 bis 250 °C in gleichmäßig voneinander beabstandeten Bereichen am Umfang der Wand (21) einschließt und die Heißluft vorzugsweise nicht länger als 1 s, vorzugsweise 0,2 bis 0,6 s, beaufschlagt wird.

7. Methode nach einem der Ansprüche 5 oder 6, wobei der Schritt des Formens der Wand (21) des Halms (1) zu einem verzweigten Teil (2a, 2b) das Abstützen der Innenseite der Wand (21) zwischen den gepressten Bereichen einschließt, vorzugsweise durch das Bereitstellen von Abstandshaltern (13) innerhalb des Halms (1) an Stellen zwischen den erwärmten und gepressten Bereichen, um die Wand (21) abzustützen, wenn die erwärmten Bereiche gepresst werden.

8. Methode nach Anspruch 5, wobei das Erwärmen der Innenseite der Wand (21) das Einführen einer Düse (8) in den Halm (1), wobei die Düse (8) Düsenöffnungen (10) umfasst, die auf die Innenseite der Wand (21) gerichtet sind, und das Blasen von heißer Luft von vorzugsweise 150 bis 250 °C durch die Düsenöffnungen (10) einschließt.

9. Methode nach Anspruch 8, wobei die Düse (8) mit Abstandshaltern (13) zwischen den Düsenöffnungen (10) versehen ist und der Schritt des Pressens der erwärmten Bereiche das Abstützen der Innenseite der Wand (21) zwischen den gepressten Bereichen mithilfe der Abstandshalter (13) einschließt.

10. Methode nach einem der Ansprüche 5 bis 9, wobei der Schritt des Einfüllens von Füllstoffen (3) in den Halm (1) einschließt:
- teilweise Einfüllen des Halms (1);
- Formen der Wand (21) des Halms (1) zu einem ersten verzweigten Teil (2a), der an den gefüllten Teil des Halms (1) angrenzt, indem mindestens drei vorgegebene Bereiche der Innenseite der Wand (21) erwärmt werden, wobei die erwärmten Wandbereiche so gegeneinander gepresst werden, dass darin Aussparungen (22) gebildet werden und eine Innennaht (23) zwischen den Innenpunkten der Aussparungen (22), die einander berühren, erzeugt wird, wodurch mindestens drei parallele Durchgänge (17) innerhalb des inneren verzweigten Teils (2a) definiert werden;
- Einfüllen weiterer Füllstoffe in den Halm (1).

11. Methode nach einem der Ansprüche 5 bis 10, wobei der Schritt des Formens des verzweigten Teils (2a, 2b) das Erwärmen und Pressen von drei Bereichen einschließt, die entlang des Umfangs der Wand (1) gleichmäßig voneinander beabstandet sind.

12. Methode nach einem der Ansprüche 5 bis 11, wobei der Schritt des Pressens der erwärmten Wandbereiche gegeneinander einschließt, dass ein Presswerkzeug (6) mit Pressstäben (11) um eine Außenseite der Wand (21) herum angeordnet wird, so dass die Pressstäbe (11) den erwärmten Bereichen der Wand (21) zugewandt sind, und dass die Pressstäbe (11) dergestalt nach innen gedrückt werden, dass Aussparungen (22) in der Wand (21) gebildet werden und die Innenpunkte der Aussparungen (22) zusammengedrückt werden, um die Innennaht (23) zu erzeugen.

13. Vorrichtung zum Formen einer Kunststoffwand (21) eines Halms (1) nach einem der Ansprüche 1-4 in einen verzweigten Teil (2a, 2b), der mindestens drei parallele Durchgänge (17) darin definiert, **dadurch gekennzeichnet, dass** sie Folgendes umfasst:
- eine Düse (8), die zum Einführen in den Strohhalm (1) dimensioniert ist und mindestens zwei Öffnungen (10) zum Blasen von Heißluft an einer Innenseite der Wand (21) des Halms (1) und dadurch zum Erwärmen und Plastifizieren von Bereichen davon aufweist;
- ein Presswerkzeug (6) mit Pressstäben (11), die um die Außenseite der Wand (21) herum angeordnet werden können, um die erwärmten Bereiche der Wand (21) so zu pressen, dass Aussparungen (22) in der Wand (21) gebildet werden und dass die Innenpunkte der Aussparungen (22) zusammengedrückt werden, um eine gemeinsame Innennaht (23) zu erzeugen, die die Aussparungen (22) verbindet.

14. Vorrichtung nach Anspruch 13, wobei die Düse (8) mit Abstandshaltern (13) zwischen den Düsenöffnungen (10) versehen ist und die Abstandshalter (13) so dimensioniert sind, dass sie die Innenseite der Wand (21) zwischen den gepressten Bereichen abstützen und die Bildung der parallelen Durchgänge (17) sicherstellen.

15. Vorrichtung nach den Ansprüchen 13 oder 14, wobei die Düsenöffnungen (10) an einem Düsenende (7) in gleichmäßigem Abstand voneinander entlang eines kreisförmigen Umfangs vorgesehen sind, und die Pressstäbe (11) in gleichmäßig voneinander beabstandeten Aufnahmen (12) gehalten und an einem Verbinder (19) befestigt sind, der einen Innenkanal (20) zum Zuführen eines hydraulischen oder pneumatischen Mediums zu den Aufnahmen (12) zum Betätigen der Pressstäbe (11) aufweist.

## Revendications

1. Paille comprenant une paroi en matière plastique (21) ayant une première extrémité (4a) et une seconde extrémité (4b), la paroi en matière plastique comprenant :
- une première partie d'extrémité tubulaire (1a) adjacente à la première extrémité (4a) et définissant un passage unique (17a) ;
- une première partie ramifiée (2a) espacée de la première extrémité (4a) et définissant au moins trois passages parallèles (17) formés autour d'un axe longitudinal de la paille (1) et en communication fluidique avec le passage unique (17a) de la première partie d'extrémité tubulaire (1a) ;
- une seconde partie d'extrémité tubulaire (1b) adjacente à la seconde extrémité (4b) et définissant un passage unique (17b) ;
- une seconde partie ramifiée (2b) espacée de la seconde extrémité (4b) et définissant au moins trois passages parallèles (17) formés autour d'un axe longitudinal de la paille (1) et en communication fluidique avec le passage unique (17b) de la seconde partie d'extrémité tubulaire (1b) ; et
- une partie centrale allongée creuse (1c) fournissant une communication fluidique entre les passages parallèles (17) de la première partie ramifiée (2a) et les passages parallèles (17) de la seconde partie ramifiée (2b) ;
les passages parallèles (17) des première et seconde parties ramifiées (2a, 2b) sont définis par des évidements voisins (22) formés dans la paroi (21) et un joint interne commun (23) reliant les évidements voisins (21) le long de l'axe longitudinal de la paille (1) ; des charges (3) contenant des principes actifs sont disposées à l'intérieur de la partie centrale (1c) pour ajouter progressivement les principes actifs à un liquide aspiré à travers la paille (1) et les dimensions des charges (3) et la section transversale des passages parallèles (17) sont choisies de façon à empêcher les charges (3) de passer à travers les passages parallèles (17) des première et seconde parties ramifiées (2a, 2b).

2. Paille selon la revendication 1, dans laquelle la partie centrale (1c) est une partie tubulaire allongée définissant un passage unique (17c), ou la partie centrale (1c) comprend au moins une partie ramifiée interne (2c) comprenant des passages parallèles (17) qui sont définis par des évidements voisins (22) formés dans la paroi (21) de la paille (1) et un joint interne (23) reliant les évidements voisins (22), et les charges (3) sont disposées entre la première partie ramifiée, la seconde partie ramifiée et la partie ramifiée interne (2a, 2b, 2c).

3. Paille selon la revendication 2, dans laquelle les charges (3) disposées entre une paire donnée de parties ramifiées (2a, 2c) diffèrent en couleur, forme ou teneur en principes actifs par rapport aux charges (3) disposées entre une autre paire de parties ramifiées (2b, 2c) .

4. Paille selon l'une quelconque des revendications 1 à 3, dans laquelle l'une des parties d'extrémité tubulaires (1a, 1b) comprend un segment de soufflets à angle ajustable (30).

5. Procédé de fabrication d'une paille (1) selon l'une quelconque des revendications 1 à 4, qui est remplie de charges (3) contenant des principes actifs pour ajouter progressivement les principes actifs à un liquide passant à travers la paille (1), le procédé comprenant les étapes:
- fournir une paille en matière plastique (1) ayant une paroi tubulaire allongée (21) avec une première extrémité (4a) et une seconde extrémité (4b) ;
- mettre en forme la paroi (21) de la paille (1) en une première partie ramifiée (2a) espacée de la première extrémité (4a) de la paille par chauffage d'au moins trois régions données d'un côté interne de la paroi (21), pression des régions de paroi chauffées les unes contre les autres de façon à former des évidements (22) à l'intérieur de celles-ci et de façon à créer un joint interne commun (23) entre les pointes internes des évidements (22) en contact les unes avec les autres, définissant ainsi au moins trois passages parallèles (17) à l'intérieur de la première partie ramifiée (2a) ;
- fournir des charges (3) contenant des principes actifs solubles et ayant des dimensions qui empêchent les charges (3) de passer à travers les passages parallèles (17) ;
- remplir les charges dans la paille (1) à partir de la seconde extrémité (4b) ;
- mettre en forme la paroi (21) de la paille (1) en une seconde partie ramifiée (2b) espacée de la seconde extrémité (4b) de la paille (1) par chauffage d'au moins trois régions données du côté interne de la paroi (21), pression des régions de paroi chauffées les unes contre les autres de façon à former des évidements (22) à l'intérieur de celles-ci et de façon à créer un joint interne commun (23) entre les pointes internes des évidements (22) en contact les unes avec les autres, définissant ainsi au moins trois passages parallèles (17) à l'intérieur de la seconde partie ramifiée (2b).

6. Procédé selon la revendication 5, dans lequel chauffer le côté interne de la paroi (21) comprend souffler de l'air chaud de 150 à 250°C au niveau de régions espacées uniformément les unes des autres à la circonférence de la paroi (21) et, de préférence, l'air chaud est appliqué pendant au maximum 1 seconde, de préférence pendant 0,2 à 0,6 seconde.

7. Procédé selon l'une quelconque des revendications 5 ou 6, dans lequel l'étape de mise en forme de la paroi (21) de la paille (1) en une partie ramifiée (2a, 2b) comprend supporter le côté interne de la paroi (21) entre les régions pressées, de préférence en fournissant des éléments d'espacement (13) à l'intérieur de la paille (1) à des emplacements entre les régions chauffées et pressées afin de supporter la paroi (21) lorsque les régions chauffées sont en train d'être pressées.

8. Procédé selon la revendication 5, dans lequel chauffer le côté interne de la paroi (21) comprend insérer une buse (8) dans la paille (1), laquelle buse (8) comprend des ouvertures de buse (10) orientées sur le côté interne de la paroi (21) et soufflant de l'air chaud de préférence de 150 à 250°C à travers les ouvertures de buse (10).

9. Procédé selon la revendication 8, dans lequel la buse (8) est munie d'éléments d'espacement (13) entre les ouvertures de buse (10) et l'étape de pression des régions chauffées comprend supporter le côté interne de la paroi (21) entre les régions pressées par l'intermédiaire des éléments d'espacement (13).

10. Procédé selon l'une quelconque des revendications 5 à 9, dans lequel l'étape de remplissage des charges (3) dans la paille (1) comprend :
- remplir partiellement la paille (1) ;
- mettre en forme la paroi (21) de la paille (1) en une première partie ramifiée (2a) adjacente à la partie remplie de la paille (1) par chauffage d'au moins trois régions données du côté interne de la paroi (21), pression des régions de paroi chauffées les unes contre les autres de façon à former des évidements (22) à l'intérieur de celles-ci et de façon à créer un joint interne (23) entre les pointes internes des évidements (22) en contact les unes avec les autres, définissant ainsi au moins trois passages parallèles (17) à l'intérieur de la partie ramifiée interne (2c) ;
- remplir d'autres charges dans la paille (1).

11. Procédé selon l'une quelconque des revendications 5 à 10, dans lequel l'étape de mise en forme de la partie ramifiée (2a, 2b) comprend chauffer et presser trois régions qui sont espacées uniformément les unes des autres le long de la circonférence de la paroi (21).

12. Procédé selon l'une quelconque des revendications 5 à 11, dans lequel l'étape de pression des régions de paroi chauffées les unes contre les autres comprend disposer un outil de pression (6) ayant des tiges de pressage (11) autour d'un côté externe de la paroi (21) de telle sorte que les tiges de pressage (11) font face aux régions chauffées de la paroi (21), et pousser les tiges de pressage (11) à l'intérieur de façon à former des évidements (22) dans la paroi (21) et presser les pointes internes des évidements (22) ensemble afin de créer le joint interne (23).

13. Dispositif pour mettre en forme une paroi en matière plastique (21) d'une paille (1) selon l'une quelconque des revendications 1 à 4 en une partie ramifiée (2a, 2b) définissant au moins trois passages parallèles (17) à l'intérieur de celle-ci, **caractérisé par le fait qu'**il comprend :
- une buse (8) dimensionnée pour être insérée dans la paille (1) et ayant au moins deux ouvertures (10) pour souffler de l'air chaud sur un côté interne de la paroi (21) de la paille (1) et ainsi chauffer et plastifier des régions de celle-ci ;
- un outil de pression (6) ayant des tiges de pressage (11) qui peuvent être disposées autour du côté externe de la paroi (21) pour presser les régions chauffées de la paroi (21) de façon à former des évidements (22) dans la paroi (21) et de façon à presser les pointes internes des évidements (22) ensemble afin de créer un joint interne commun (23) reliant les évidements (22).

14. Dispositif selon la revendication 13, dans lequel la buse (8) est munie d'éléments d'espacement (13) entre les ouvertures de buse (10), et les éléments d'espacement (13) étant dimensionnés de façon à supporter le côté interne de la paroi (21) entre les régions pressées et assurer la formation des passages parallèles (17).

15. Dispositif selon la revendication 13 ou 14, dans lequel les ouvertures de buse (10) sont prévues sur une extrémité de buse (7), espacées uniformément les unes des autres le long d'un périmètre circulaire, et les tiges de pressage (11) sont maintenues dans des mandrins (12) espacés uniformément les uns des autres et fixés à un raccord (19) ayant un conduit interne (20) pour distribuer un milieu hydraulique ou pneumatique aux mandrins (12) pour actionner les tiges de pressage (11).
